# EUROPÄISCHE PATENTANMELDUNG

(11) **EP 4 810 173 A1**
(43) Veröffentlichungstag der Anmeldung: **23.09.2026**
(21) Anmeldenummer: 26152500.0
(22) Anmeldetag: 19.01.2026
(51) Int. Cl.: B08B 9/42

(54) **BEHÄLTERREINIGUNGSANLAGE UMFASSEND EINE TRANSPORTVORRICHTUNG UND AUSLESEEINRICHTUNG**

(30) Priorität: 18.03.2025 DE 102025110313
(71) Anmelder: Krones AG, 93073 Neutraubling (DE)
(72) Erfinder: LEITHE, Mario, 93073 Neutraubling (DE)
(74) Vertreter: Grünecker Patent- und Rechtsanwälte PartG mbB

(57) **Zusammenfassung**

Behälterreinigungsanlage (100) umfassend eine Transportvorrichtung (100) für Behälter (105) und eine Ausleseeinrichtung (102), wobei die Transportvorrichtung wenigstens einen Behälterkorbträger (103) zum Aufnehmen wenigstens eines Behälterkorbes (104) umfasst, wobei wenigstens einem Behälterkorbträger ein Erkennungselement (106) zugeordnet ist, wobei die Ausleseeinrichtung ausgebildet ist, das Erkennungselement auszulesen.

## Beschreibung

Die vorliegende Erfindung betrifft eine Behälterreinigungsanlage umfassend eine Transportvorrichtung für Behälter und eine Ausleseeinrichtung gemäß unabhängigem Anspruch 1 sowie ein Verfahren zum Erkennen wenigstens eines Behälterkorbträgers in einer Behälterreinigungsanlage gemäß unabhängigem Anspruch 9.

### Stand der Technik

Die Reinigung von Behältern in Behälterreinigungsanlagen ist aus dem Stand der Technik bekannt. Hierfür werden die Behälter typischerweise in Behälterkörben mittels einer Transportvorrichtung durch die Behälterreinigungsanlage geführt. Die Behälterkörbe können wiederum in einer Vielzahl von Behälterkorbträgern angeordnet sein.

Behälterreinigungsanlagen können beispielsweise abhängig vom Anlagentyp eine verschiedene Anzahl von Behälterkorbträgern umfassen. Ferner kann es vorkommen, dass Behälterkorbträger aufgrund von Defekten aus der Anlage entfernt werden müssen oder die Anzahl an Behälterkorbträger aus anderen Gründen verändert wird.

Eine automatisierte Bestimmung der Anzahl sowie eine exakte Positionierung der sich in der Behälterreinigungsanlage befindlichen Behälterkorbträger ist bis jetzt nicht möglich, obwohl diese Größe zum ordnungsgemäßen Betrieb der Behälterreinigungsanlage notwendig sein kann. Ferner können in Behälterreinigungsanlagen aus dem Stand der Technik die Behälterkorbträger innerhalb der Anlage nicht nachverfolgt werden.

### Aufgabe

Ausgehend vom bekannten Stand der Technik kann die zu lösende technische Aufgabe der vorliegenden Erfindung dahingehend formuliert werden den Betrieb einer Behälterreinigungsanlage zu verbessern.

### Lösung

Diese Aufgabe wird durch die Behälterreinigungsanlage umfassend eine Transportvorrichtung für Behälter und eine Ausleseeinrichtung gemäß unabhängigem Anspruch 1 und das Verfahren zum Erkennen wenigstens eines Behälterkorbträgers in einer Behälterreinigungsanlage gemäß unabhängigem Anspruch 9 gelöst. Bevorzugte Ausführungsformen sind in den abhängigen Ansprüchen erfasst.

Die erfindungsgemäße Behälterreinigungsanlage umfasst eine Transportvorrichtung für Behälter und eine Ausleseeinrichtung, wobei die Transportvorrichtung wenigstens einen Behälterkorbträger zum Aufnehmen wenigstens eines Behälterkorbes umfasst und dem wenigstens einen Behälterkorbträger ein Erkennungselement zugeordnet ist, wobei die Ausleseeinrichtung ausgebildet ist, das Erkennungselement auszulesen.

Die Behälterreinigungsanlage kann beispielsweise wenigstens ein Tauchbecken mit einem Reinigungsfluid, durch welches die Behälter in den Behälterkörben zur Reinigung geführt werden können und/oder wenigstens eine Ausspritzvorrichtung zum Ausspritzen der Behälter mit einem Reinigungsfluid umfassen. Bei dem Reinigungsfluid kann es sich beispielsweise um eine Reinigungslauge, Wasser oder jedes andere geeignete Reinigungsfluid handeln.

Bei den Behältern kann es sich beispielsweise um Flaschen, umfassend ein Glas oder einen Kunststoff, wie sie in der getränkeverarbeitenden Industrie verwendet werden, handeln. Es kann sich jedoch auch um jede andere Art von Behälter, wie eine Tube, eine Dose, einen Becher oder eine Spritze handeln. Bei dem Behälter kann es sich auch um einen Behälter handeln, welcher in der Lebensmittelindustrie, der Kosmetikindustrie oder der medizinischen Industrie zum Einsatz kommt.

Unter dem Behälterkorbträger kann eine Aufnahmevorrichtung für Behälterkörbe verstanden werden, in welcher die Behälterkörbe vorzugsweise geordnet entlang einer Reihe aufgenommen werden können. Der Behälterkorbträger kann beispielsweise zur Aufnahme von 10, 20, 30, 50 oder jeder anderen Anzahl von Behälterkörben ausgestaltet sein. Die maximale Aufnahmekapazität eines Behälterkorbträgers kann von der spezifischen Art der Ausgestaltung der Behälterreinigungsanlage, insbesondere von einer Breite eines Reinigungsbereichs der Behälterreinigungsanlage durch welche der Behälterkorbträger geführt werden kann, abhängig sein.

Der Behälterkorb kann zum Aufnehmen eines Behälters ausgebildet sein. Weiterhin kann der Behälterkorb zum Fixieren des Behälters oder einer Behältermündung in dem Behälterkorb ausgebildet sein.

Bei dem Erkennungselement kann es sich um eine visuelle Markierung, wie einen QR-Code, einen Barcode oder eine Zahl, ein passives elektronisches Bauteil, wie beispielsweise ein passives RFID-Element, oder ein aktives elektronisches Bauteil, wie beispielsweise ein aktives RFID Element oder jeden anderen aktiven Sender handeln.

Dass die Ausleseeinrichtung ausgebildet ist, das Erkennungselement auszulesen, kann bedeuten, dass die Ausleseeinrichtung von dem Erkennungselement umfasste Informationen auslesen kann.

Beispielsweise kann die Ausleseeinrichtung auch ausgebildet sein, die von dem Erkennungselement ausgelesenen Informationen weiterzuverarbeiten. Weiterhin kann die Ausleseeinheit beispielweise ausgebildet sein, eine Initialisierung oder Konfiguration der Behälterreinigungsanlage basierend auf der ausgelesenen Information durchzuführen. Es ist auch denkbar, dass die Ausleseeinrichtung ausgebildet ist einen Betriebsparameter der Behälterreinigungsanlage zu steuern oder die ausgelesene Information einem Bediener zur Verfügung zu stellen, welcher basierend auf den zur Verfügung gestellten Informationen eine Initialisierung, Konfiguration oder eine andere Handlung an der Behälterreinigungsanlage durchführen kann.

Durch die erfindungsgemäße Behälterreinigungsanlage können die Behälterkorbträger durch das Erkennungselement und die Ausleseeinrichtung automatisiert in der Behälterreinigungsanlage identifiziert werden. Durch die über die Behälterkorbträger erlangten Information kann der Betrieb der Behälterreinigungsanlage effizienter gestaltet werden. Beispielsweise können die über die Behälterkorbträger erlangten Information zur Initialisierung und Konfiguration der Behälterreinigungsanlage genutzt werden und mögliche Fehler im Betriebsablauf, welche beispielsweise durch einen Wechsel von Behälterkorbträgern hervorgerufen werden, verhindert oder sich wiederholende Fehler in der Maschine oder im Prozess erkannt werden.

In einer Ausführungsform kann die Ausleseeinrichtung wenigstens zwei Unterausleseeinrichtungen umfassen, welche an verschiedenen Positionen in der Behälterreinigungsanlage angeordnet und zum Auslesen des Erkennungselements ausgebildet sind. Durch das Vorsehen von wenigstens zwei Unterausleseeinrichtungen an zwei verschiedenen Positionen können ortsabhängige Informationen über die Behälterkorbträger ermittelt werden. Weiterhin kann das Auslesen auch bei einer Störung einer Ausleseeinrichtung sichergestellt werden.

Ferner kann es vorgesehen sein, dass die Ausleseeinrichtung ausgebildet ist, basierend auf wenigstens einem ausgelesenen Erkennungselement, eine Position wenigstens eines Behälterkorbträgers in der Behälterreinigungsanlage und/oder eine Anzahl von Behälterkorbträgern in der Behälterreinigungsanlage zu bestimmen. Durch das Bestimmen der Position kann beispielsweise ein defekter oder aus sonstigem Grund auszuwechselnder Behälterkorbträger in der Behälterreinigungsanlage nachverfolgt und auf effiziente Weise ausgetauscht werden. Die Anzahl der Behälterkorbträger kann beispielsweise für eine Initialisierung oder Konfiguration der Behälterreinigungsanlage genutzt werden.

In einer Ausführungsform kann es vorgesehen sein, dass das einem Behälterkorbträger zugeordnete Erkennungselement eine für den jeweiligen Behälterkorbträger eindeutige Kennung, wie beispielsweise einen eindeutigen Identifizierungscode, umfasst. Durch die eindeutige Kennung kann jeder Behälterkorbträger eindeutig identifiziert und nachverfolgt werden.

In einer Weiterbildung der vorhergehenden Ausführungsform kann die Ausleseeinrichtung ausgebildet sein, basierend auf einem Vergleich der eindeutigen Kennung wenigstens eines ausgelesenen Erkennungselements und in einer Datenbank hinterlegten eindeutigen Referenzkennungen, zu bestimmen, ob die Transportvorrichtung einen bestimmten Behälterkorbträger umfasst oder nicht. Somit können Informationen über die von der Behälterreinigungsanlage umfassten Behälterkorbträger gewonnen werden und beispielsweise ein Austausch spezifischer Behälterkorbträger effizienter gestaltet werden.

Es kann weiterhin vorgesehen sein, dass der wenigstens eine Behälterkorbträger das Erkennungselement umfasst. Wird ein Behälterkorbträger mit einem Erkennungselement ausgestattet, dann kann der Behälterkorbträger auch bei veränderter Anordnung auf der Transportvorrichtung oder bei einem Wechsel zwischen Behälterreinigungsanlagen über das Erkennungselement identifiziert werden.

In einer Ausführungsform kann es vorgesehen sein, dass die Transportvorrichtung eine Transportkette mit einer Vielzahl von Kettengliedern umfasst, wobei einem Behälterkorbträger ein Kettenglied zugeordnet ist, wobei das Kettenglied das Erkennungselement umfasst. Somit muss nicht jeder Behälterkorbträger mit einem Erkennungselement ausgestattet werden, wodurch Kosten reduziert werden können. Wenn sowohl das Kettenglied als auch der Behälterkorbträger ein Erkennungselement umfassen, kann auch bei einem fehlerhaften Erkennungselement eine Erkennung über das andere Erkennungselement sichergestellt und die Fehleranfälligkeit auf diese Weise reduziert werden.

Ferner kann es vorgesehen sein, dass das Erkennungselement ein RFID-Element umfasst. RFID-Elemente stellen eine besonders kostengünstige, platzsparende und zuverlässige Ausgestaltungsart des Erkennungselements dar.

Erfindungsgemäß ist ferner ein Verfahren zum Erkennen wenigstens eines Behälterkorbträgers in einer Behälterreinigungsanlage vorgesehen, wobei die Behälterreinigungsanlage wenigstens eine Transportvorrichtung für Behälter und eine Ausleseeinrichtung umfasst, wobei die Transportvorrichtung wenigstens einen Behälterkorbträger zum Aufnehmen wenigstens eines Behälterkorbes umfasst, wobei wenigstens einem Behälterkorbträger ein Erkennungselement zugeordnet ist, wobei die Ausleseeinrichtung das Erkennungselement ausliest.

Durch das erfindungsgemäße Verfahren können die Behälterkorbträger durch das Erkennungselement und die Ausleseeinrichtung automatisiert identifiziert werden. Basierend auf den über die Behälterkorbträger erlangten Information kann der Betrieb der Behälterreinigungsanlage effizienter gestaltet werden. Beispielsweise können die über die Behälterkorbträger erlangten Information zur Initialisierung oder Konfiguration der Behälterreinigungsanlage genutzt werden und möglich Fehler im Betriebsablauf, welche beispielsweise durch einen Wechsel von Behälterkorbträgern hervorgerufen werden, verhindert oder sich wiederholende Fehler in der Maschine oder im Prozess erkannt werden.

In einer Ausführungsform des Verfahrens kann die Ausleseeinrichtung wenigstens zwei Unterausleseeinrichtungen umfassen, welche an verschiedenen Positionen in der Behälterreinigungsanlage angeordnet sind, wobei die wenigstens zwei Unterausleseeinrichtungen das Erkennungselement auslesen. Durch das Vorsehen von wenigstens zwei Unterausleseeinrichtungen an zwei verschiedenen Positionen können ortsabhängige Informationen über die Behälterkorbträger ermittelt werden.

Weiterhin kann es vorgesehen sein, dass die Ausleseeinrichtung basierend auf wenigstens einem ausgelesenen Erkennungselement, eine Position wenigstens eines Behälterkorbträgers in der Behälterreinigungsanlage und/oder eine Anzahl von Behälterkorbträgern in der Behälterreinigungsanlage bestimmt. Durch das Bestimmen der Position kann beispielsweise ein defekter oder aus sonstigem Grund auszuwechselnder Behälterkorbträger in der Behälterreinigungsanlage nachverfolgt und auf ausgetauscht werden. Die Anzahl der Behälterkorbträger kann beispielsweise für eine Initialisierung oder Konfiguration der Behälterreinigungsanlage genutzt werden kann.

In einer Ausführungsform des Verfahrens kann das einem Behälterkorbträger zugeordnete Erkennungselement eine für den jeweiligen Behälterkorbträger eindeutige Kennung, wie beispielsweise einen eindeutigen Identifizierungscode, umfassen. Durch die eindeutige Kennung kann jeder Behälterkorbträger eindeutig identifiziert und nachverfolgt werden.

In einer Weiterbildung der vorhergehenden Ausführungsform des Verfahrens kann die Ausleseeinrichtung basierend auf einem Vergleich der eindeutigen Kennung wenigstens eines ausgelesenen Erkennungselements und in einer Datenbank hinterlegten eindeutigen Referenzkennungen bestimmen, ob die Transportvorrichtung einen bestimmten Behälterkorbträger umfasst oder nicht. Somit können Informationen über die von der Behälterreinigungsanlage umfassten Behälterkorbträger gewonnen werden und beispielsweise ein Austausch spezifischer Behälterkorbträger effizienter gestaltet werden.

In einer Ausführungsform des Verfahrens kann der wenigstens eine Behälterkorbträger das Erkennungselement umfassen. Wird ein Behälterkorbträger mit einem Erkennungselement ausgestattet, dann kann der Behälterkorbträger auch bei veränderter Anordnung auf der Transportvorrichtung oder bei einem Wechsel zwischen Behälterreinigungsanlagen über das Erkennungselement identifiziert werden.

Weiterhin kann es vorgesehen sein, dass die Transportvorrichtung eine Transportkette mit einer Vielzahl von Kettengliedern umfasst, wobei einem Behälterkorbträger ein Kettenglied zugeordnet ist, wobei das Kettenglied das Erkennungselement umfasst. Auf diese Weise muss nicht jeder Behälterkorbträger mit einem Erkennungselement ausgestattet werden, wodurch Kosten reduziert werden können. Wenn sowohl das Kettenglied als auch der Behälterkorbträger ein Erkennungselement umfasst, kann auch bei einem fehlerhaften Erkennungselement eine Erkennung über das andere Erkennungselement sichergestellt und die Fehleranfälligkeit reduziert werden.

### Kurze Figurenbeschreibung

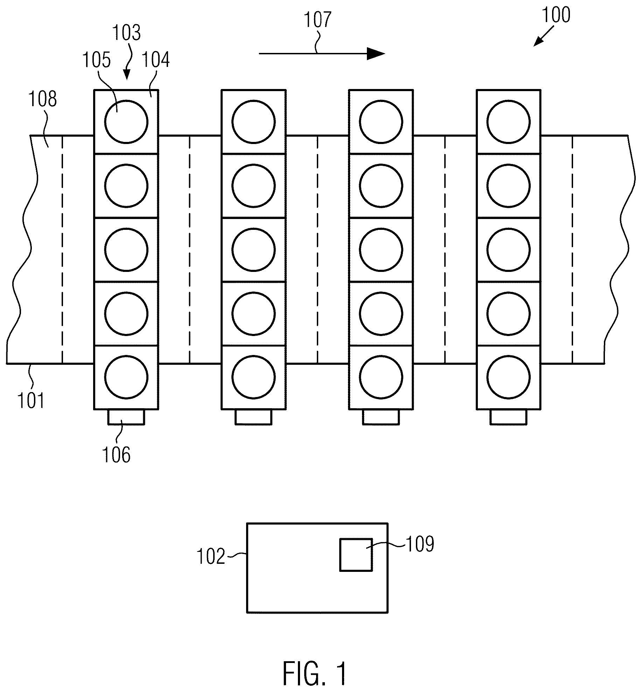

- Fig. 1:: Behälterreinigungsanlage umfassend eine Transportvorrichtung für Behälter und eine Ausleseeinrichtung gemäß einer Ausführungsform

### Ausführliche Figurenbeschreibung

Fig. 1 zeigt eine Draufsicht auf einen Teilbereich einer Behälterreinigungsanlage 100 umfassend eine Transportvorrichtung 101 für Behälter 105 und eine Ausleseeinrichtung 102 gemäß einer Ausführungsform.

Die Behälterreinigungsanlage kann wenigstens eine Reinigungsvorrichtung zum Beaufschlagen der Behälter mit einem Reinigungsfluid umfassen. Die Reinigungsvorrichtung kann beispielsweise wenigstens ein mit dem Reinigungsfluid, wie beispielweise einer Reinigungslauge, Wasser oder jedem anderen Reinigungsfluid, gefülltes Tauchbecken umfassen. Zusätzlich oder alternativ kann die Reinigungsvorrichtung wenigstens eine Spritzvorrichtung umfassen, in welcher ein Behälterinnenraum mit dem Reinigungsfluid beispielsweise über Spritzdüsen ausgespritzt werden kann.

Die Behälterreinigungsanlage 100 umfasst erfindungsgemäß eine Transportvorrichtung 101 für Behälter, welche wenigstens einen Behälterkorbträger 103 zum Aufnehmen wenigstens eines Behälterkorbes 104 umfasst. In dem Behälterkorb 104 kann ein zu reinigender Behälter 105 angeordnet sein. Mittels der Transportvorrichtung 101 können die sich in dem Behälterkorbträger 103 befindlichen Behälter 105 zur Reinigung durch die Behälterreinigungsanlage 100 geführt werden.

Die Behälter 105 können den Behälterkörben 104 in einem Einlaufbereich der Behälterreinigungsanlage 100 zugeführt werden. Nach Durchlaufen der Behälterreinigungsanlage 100 können die Behälter 105 in einem Auslaufbereich aus den Behälterkörben 104 herausgeführt und von der Behälterreinigungsanlage 100 abtransportiert werden.

Bei der Behälterreinigungsanlage 100 kann es sich um eine Einend-Behälterreinigungsanlage, bei welcher die Behälter an einer gleichen Seite der Behälterreinigungsanlage ein- und ausgeführt werden, oder um eine Zweiend-Behälterreinigungsanlage handeln, bei welcher die Behälter 105 an unterschiedlichen Seiten, beispielsweise an gegenüberliegenden Seiten, der Behälterreinigungsanlage ein- und ausgeführt werden.

Bei der Transportvorrichtung 101 kann es sich um jede Transportvorrichtung 101 handeln, welche zum Transport wenigstens eines Behälterkorbträgers 103 geeignet ist. Wie in der Fig. 1 gezeigt, kann die Transportvorrichtung 101 beispielsweise eine Transportkette umfassen, welche eine Vielzahl von Kettengliedern 108 umfasst. Ein Behälterkorbträger 103 kann in diesem Fall an einem Kettenglied 108 angeordnet sein. Diese spezifische Art der Ausgestaltung der Transportvorrichtung 101 ist als beispielhaft zu verstehen und die Transportvorrichtung 101 kann auch auf jede andere Weise, welche zum Transport der Behälterkorbträger 103 geeignet ist, ausgestaltet sein.

In der Ausführungsform der Fig. 1 umfasst die Behälterreinigungsanlage 100 vier Behälterkorbträger 103. Diese spezifische Art der Ausgestaltung der Behälterreinigungsanlage 100 ist als beispielhaft zu verstehen, so dass die Transportvorrichtung 101 auch jede andere Anzahl an Behälterkorbträgern 103, wie beispielsweise einen, zehn, hundert oder jede andere Anzahl an Behälterkorbträgern 103 umfassen kann. Die Anzahl der Behälterkorbträger kann flexibel gewählt werden.

Die Behälterkorbträger 103 können beispielsweise als Standardbehälterkorbträger 103 oder gewichtsreduzierte Behälterkorbträger 103 ausgeführt sein. Im Vergleich zu einem Standardbehälterkorbträger 103 kann ein gewichtsreduzierter Behälterkorbträger 103 Aussparungen, beispielsweise in einem Seitenbereich, umfassen, wodurch sich das Gewicht des Trägers reduzieren lässt.

Auch die in der Figur 1 gezeigte Ausgestaltung der Behälterkorbträger 103 zur Aufnahme von fünf Behälterkörben 104 ist als beispielhaft zu verstehen. Ein Behälterkorbträger 103 kann auch jede andere Anzahl an Behälterkörben 104 größer gleich eins, wie beispielsweise einen, zehn, fünfzig oder jede andere Anzahl aufnehmen.

Jeder der Behälterkörbe 104 kann wiederum einen Behälter 105 aufnehmen. Die Behälterkörbe können einen Fixiermechanismus zum Fixieren des Behälters im Behälterkorb 104 umfassen. Mittels des Fixiermechanismus kann verhindert werden, dass die Behälter während dem Reinigungsvorgang aus dem Behälterkorb 104 herausrutschen und somit Störungen der Behälterreinigungsanlage 100 verhindert werden.

Erfindungsgemäß ist wenigstens einem Behälterkorbträger 103 ein Erkennungselement 106 zugeordnet. Weiterhin umfasst die Behälterreinigungsanlage 100 eine Ausleseeinrichtung 102, welche ausgebildet ist, das Erkennungselement 106 auszulesen.

Das Erkennungselement 106 kann beispielsweise ein optisches Erkennungselement 106 wie einen Barcode, einen QR-Code oder eine Zahl umfassen. In diesem Fall kann die Ausleseeinrichtung 102 beispielsweise eine Kamera zum Auslesen des optischen Erkennungselements umfassen.

Alternativ oder zusätzlich kann das Erkennungselement 106 jedoch auch ein aktives oder passives elektronisches Bauteil, wie beispielweise ein aktives oder passives RFID-Element oder jedes andere geeignete aktive oder passive elektronische Bauteil umfassen. Wenn das Erkennungselement 106 beispielsweise ein passives RFID-Element umfasst, dann kann die Ausleseeinrichtung 102 einen Sender, beispielweise eine Spule, umfassen, welcher ausgebildet ist elektromagnetische Wellen eines bestimmten Frequenzbereichs oder verschiedener Frequenzbereiche, wie beispielweise im kHz im MHz im GHZ oder in jedem anderen geeigneten Frequenzbereich zu emittieren. Befindet sich nun das passive RFID-Element in einem Interaktionsbereich mit dem Sender der Ausleseeinrichtung 102 dann kommt es zur Interaktion zwischen der emittierten elektromagnetischen Strahlung und dem RFID-Element, welche wiederum durch den Sender, wie die Spule, detektiert werden können.

Die Ausleseeinrichtung 102 kann weiterhin ausgebildet sein, die ausgelesenen Informationen weiter zu verarbeiten. Hierfür kann die Ausleseeinrichtung 102, wie in der Fig. 1 gezeigt, eine Steuereinheit 109 umfassen. Die Steuereinheit 109 kann beispielsweise einen Prozessor und eine Speichereinheit, wie einen nichtflüchtigen Speicher, umfassen. Auf der Speichereinheit kann beispielsweise eine Datenbank mit Referenzkennungen hinterlegt sein.

Es kann jedoch auch vorgesehen sein, dass die Steuereinheit 109 der Ausleseeinrichtung 102 zugeordnet ist. In diesem Fall kann die Steuereinheit von der Behälterreinigungsanlage 100 umfasst sein, oder als separate Steuereinheit ausgestaltet sein, wie beispielsweise ein Servercomputer, welcher über eine Datenverbindung mit der Behälterreinigungsanlage 100 in Verbindung steht.

Die Weiterverarbeitung der durch die von der Ausleseeinrichtung 102 ausgelesenen Informationen kann beispielsweise umfassen, dass die Behälterreinigungsanlage 100 durch die Steuereinheit 109 basierend auf den ausgelesenen Informationen initialisiert und/oder konfiguriert wird. Es kann auch vorgesehen sein, dass die Steuereinheit die Behälterreinigungsanlage 100 basierend auf dem ausgelesenen Erkennungselement 106 auf eine beliebige andere Weise steuert oder regelt. Weiterhin kann die Weiterverarbeitung der Informationen umfassen, dass die Informationen an einen Benutzer, wie beispielsweise einen Bediener der Behälterreinigungsanlage 100 ausgegeben werden, welcher basierend auf den ausgelesenen Informationen die Behälterreinigungsanlage initialisiert und/oder konfiguriert oder andere Arbeitsschritte an der Behälterreinigungsanlage 100, wie beispielsweise einen Wechsel eines Behälterkorbträgers 103, eines Behälterkorbes 104 oder einer anderen Komponente der Behälterreinigungsanlage 100 durchführt.

Auch die in der Fig. 1 beschriebene spezifische Ausgestaltung, bei welcher die Behälterreinigungsanlage 100 nur eine Ausleseeinrichtung 102 umfasst, ist als beispielhaft zu verstehen. So kann die Behälterreinigungsanlage 100 auch mehr als eine wie beispielsweise zwei, fünf, zehn oder jede andere Anzahl von Ausleseeinrichtungen 102 umfassen. Die Ausleseeinrichtungen 102 können dabei an verschiedenen Positionen in der Behälterreinigungsanlage, vorzugsweise an verschiedenen Positionen entlang einer Transportrichtung 107 der Behälterkorbträger 103 angeordnet sein.

Durch das Vorsehen mehrerer Ausleseeinrichtungen 102 an verschiedenen Positionen innerhalb der Behälterreinigungsanlage 100 können ortsabhängige Informationen über die Behälterkorbträger 103, wie beispielsweise eine Position des wenigstens einen Behälterkorbträgers 103 in der Behälterreinigungsanlage 100, ermittelt werden. Mittels den ortsabhängigen Informationen können die Behälterkorbträger 103 innerhalb der Behälterreinigungsanlage 100 nachverfolgt werden und beispielweise eine historische Dokumentation für die Behälterkorbträger 103 erstellt werden. Weiterhin kann beispielsweise dokumentiert werden, wie viele Reinigungszyklen ein Behälterkorbträger 103 bereits durchlaufen hat. Basierend auf den so erlangten Informationen kann beispielweise ein Wechsel eines Behälterkorbträgers 103 terminiert werden.

Die Ausleseeinrichtung 102 kann weiterhin ausgebildet sein basierend auf dem wenigstens einen ausgelesenen Erkennungselement 106 eine Anzahl von Behälterkorbträgern 103 in der Behälterreinigungsanlage zu bestimmen. Umfasst die Ausleseeinrichtung 102, wie oben beschrieben, eine Steuereinheit 109, dann kann die Anzahl an Behälterkorbträger 103 durch die Steuereinheit bestimmt werden. Es kann zudem vorgesehen sein, dass die Behälterreinigungsanlage 100 basierend auf der bestimmten Anzahl an Behälterkorbträgern durch die Steuereinheit 109 initialisiert oder konfiguriert wird. Zum ordnungsgemäßen Betrieb der Behälterreinigungsanlage 100 kann es beispielweise vorgesehen sein, dass die Behälterreinigungsanlage 100 basierend auf der bestimmten Anzahl an Behälterkorbträgern 103 vor Beginn eines Reinigungsvorgangs parametriert wird.

Es kann vorgesehen sein, dass das einem Behälterkorbträger 103 zugeordnete Erkennungselement 106 eine für den jeweiligen Behälterkorbträger 103 eindeutige Kennung, wie beispielsweise einen eindeutigen Identifizierungscode, umfasst. In diesem Fall kann jeder der Behälterkorbträger 103 eindeutig identifiziert werden. Die Bestimmung der Anzahl von Behälterkorbträgern 103 in der Behälterreinigungsanlage 100 kann in diesem Fall durch Bestimmung der Anzahl an unterschiedlichen Erkennungselementen 106 erfolgen. Weiterhin kann in diesem Fall die Position eines Behälterkorbträgers 103 mittels des Erkennungselements 106 eindeutig in der Behälterreinigungsanlage 100 bestimmt und nachverfolgt werden.

Ferner kann die Ausleseeinrichtung 102 bei Verwendung von eindeutigen Kennungen ausgebildet sein, basierend auf einem Vergleich der eindeutigen Kennung wenigstens eines ausgelesenen Erkennungselements und in einer Datenbank hinterlegten eindeutigen Referenzkennungen, zu bestimmen, ob die Transportvorrichtung 101 einen bestimmten Behälterkorbträger 103 umfasst oder nicht. Wie weiter oben bereits beschrieben, kann die Steuereinheit eine Speichereinheit umfassen, in welcher eine Datenbank mit den Referenzkennungen hinterlegt ist.

Auf diese Weise kann beispielsweise ermittelt werden, ob ein spezifischer Behälterkorbträger 103 von der Transportvorrichtung 101 umfasst ist oder nicht. Weiterhin kann der spezifische Behälterkorbträger 103 identifiziert werden und beispielsweise bei der Durchführung bestimmter Initialisierungs- oder Konfigurationsvorgänge oder bei der Ausführung bestimmter Programme der Behälterreinigungsanlage 100 berücksichtigt oder nicht berücksichtigt werden. Beispielsweise kann bei der Durchführung einer Behälterkorbkontrolle ein bestimmter Behälterkorbträger 103 identifiziert und bei der Kontrolle berücksichtigt oder nicht berücksichtigt werden.

Wie in der Fig. 1 gezeigt, kann das Erkennungselement 106 an einem Behälterkorbträger 103 angeordnet sein. Beispielsweise kann das Erkennungselement 106 an einer Seitenfläche des Behälterkorbträgers angeordnet sein. Diese Art der Anordnung kann beispielsweise dann gewählt werden, wenn die Ausleseeinrichtung in horizontaler Richtung neben der Transportvorrichtung 101 angeordnet ist. Auf diese Weise kann ein Abstand zwischen Erkennungselement 106 und Ausleseeinrichtung 102 möglichst geringgehalten und ein zuverlässiges Auslesen des Erkennungselements 106 gewährleistet werden. Das Erkennungselement kann jedoch beispielsweise auch auf einer Unter- oder Oberseite eines Behälterkorbträgers 103 angeordnet sein. Dies kann beispielsweise dann der Fall sein, wenn die Ausleseeinrichtung in vertikaler Richtung unterhalb oder oberhalb der Transportvorrichtung 101 angeordnet ist.

Wenn das Erkennungselement 106 an dem Behälterkorbträger 103 angeordnet ist, dann kann jeder Behälterkorbträger 103 mit einem eigenen Erkennungselement 106 ausgestattet werden. Dies ist insbesondere bei der Verwendung von eindeutigen Kennungen von Vorteil, da der Behälterkorbträger 103 auch bei einer veränderten Anordnung auf der Transportvorrichtung 101 oder bei einem Wechsel zwischen verschiedenen Behälterreinigungsanlagen basierend auf dem Erkennungselement 106 eindeutig identifiziert werden kann.

Alternativ oder zusätzlich kann es auch vorgesehen sein, dass ein Kettenglied 108 der Transportkette, auf welchem der Behälterkorbträger 103 angeordnet sein kann, das Erkennungselement 106 umfasst. Dies bringt der Vorteil mit sich, dass nicht jeder Behälterkorbträger 103 mit einem eigenen Erkennungselement 106 ausgestattet sein muss. Da bei einer Kürzung oder Erweiterung der Transportkette typischerweise einzelne Kettenglieder zusammen mit dem darauf angeordneten Behälterkorbträger 103 entfernt oder hinzugefügt werden, kann auch in diesem Fall eine Anzahl der sich in der Behälterreinigungsvorrichtung 100 befindlichen Behälterkorbträger 103 bestimmt oder einzelne Behälterkorbträger 103 über das an dem Kettenglied angeordnete Erkennungselement 106 nachverfolgt werden.

Wenn sowohl ein Erkennungselement 106 an dem Behälterkorbträger 103 als auch an dem Kettenglied 108 vorgesehen ist, dann kann auch bei einem Defekt eines Erkennungselements 106 sichergestellt werden, dass das dem Behälterkorbträger 103 zugeordnete Erkennungselement 106 durch die Ausleseeinrichtung 102 ausgelesen werden kann.

## Patentansprüche

1. Behälterreinigungsanlage umfassend eine Transportvorrichtung für Behälter und eine Ausleseeinrichtung, wobei die Transportvorrichtung wenigstens einen Behälterkorbträger zum Aufnehmen wenigstens eines Behälterkorbes umfasst, wobei wenigstens einem Behälterkorbträger ein Erkennungselement zugeordnet ist, wobei die Ausleseeinrichtung ausgebildet ist, das Erkennungselement auszulesen.

2. Behälterreinigungsanlage nach Anspruch 1, wobei die Ausleseeinrichtung wenigstens zwei Unterausleseeinrichtungen umfasst, welche an verschiedenen Positionen in der Behälterreinigungsanlage angeordnet und zum Auslesen des Erkennungselements ausgebildet sind.

3. Behälterreinigungsanlage nach Anspruch 1 oder 2, wobei die Ausleseeinrichtung ausgebildet ist, basierend auf wenigstens einem ausgelesenen Erkennungselement, eine Position wenigstens eines Behälterkorbträgers in der Behälterreinigungsanlage und/oder eine Anzahl von Behälterkorbträgern in der Behälterreinigungsanlage zu bestimmen.

4. Behälterreinigungsanlage nach einem der Ansprüche 1 bis 3, wobei das einem Behälterkorbträger zugeordnete Erkennungselement eine für den jeweiligen Behälterkorbträger eindeutige Kennung, wie beispielsweise einen eindeutigen Identifizierungscode, umfasst.

5. Behälterreinigungsanlage nach Anspruch 4, wobei die Ausleseeinrichtung ausgebildet ist, basierend auf einem Vergleich der eindeutigen Kennung wenigstens eines ausgelesenen Erkennungselements und in einer Datenbank hinterlegten eindeutigen Referenzkennungen, zu bestimmen, ob die Transportvorrichtung einen bestimmten Behälterkorbträger umfasst oder nicht.

6. Behälterreinigungsanlage nach einem der Ansprüche 1 bis 5, wobei der wenigstens eine Behälterkorbträger das Erkennungselement umfasst.

7. Behälterreinigungsanlage nach einem der Ansprüche 1 bis 6, wobei die Transportvorrichtung eine Transportkette mit einer Vielzahl von Kettengliedern umfasst, wobei einem Behälterkorbträger ein Kettenglied zugeordnet ist, wobei das Kettenglied das Erkennungselement umfasst.

8. Behälterreinigungsanlage nach einem der Ansprüche 1 bis 7, wobei das Erkennungselement ein RFID-Element umfasst.

9. Verfahren zum Erkennen wenigstens eines Behälterkorbträgers in einer Behälterreinigungsanlage, wobei die Behälterreinigungsanlage wenigstens eine Transportvorrichtung für Behälter und eine Ausleseeinrichtung umfasst, wobei die Transportvorrichtung wenigstens einen Behälterkorbträger zum Aufnehmen wenigstens eines Behälterkorbes umfasst, wobei wenigstens einem Behälterkorbträger ein Erkennungselement zugeordnet ist, wobei die Ausleseeinrichtung das Erkennungselement ausliest.

10. Verfahren nach Anspruch 9, wobei die die Ausleseeinrichtung wenigstens zwei Unterausleseeinrichtungen umfasst, welche an verschiedenen Positionen in der Behälterreinigungsanlage angeordnet sind, wobei die wenigstens zwei Unterausleseeinrichtungen das Erkennungselement auslesen.

11. Verfahren nach Anspruch 9 oder 10, wobei die Ausleseeinrichtung basierend auf wenigstens einem ausgelesenen Erkennungselement, eine Position wenigstens eines Behälterkorbträgers in der Behälterreinigungsanlage und/oder eine Anzahl von Behälterkorbträgern in der Behälterreinigungsanlage bestimmt.

12. Verfahren nach einem der Ansprüche 9 bis 11, wobei das einem Behälterkorbträger zugeordnete Erkennungselement eine für den jeweiligen Behälterkorbträger eindeutige Kennung, wie beispielsweise einen eindeutigen Identifizierungscode, umfasst.

13. Verfahren nach Anspruch 12, wobei die Ausleseeinrichtung basierend auf einem Vergleich der eindeutigen Kennung wenigstens eines ausgelesenen Erkennungselements und in einer Datenbank hinterlegten eindeutigen Referenzkennungen bestimmt, ob die Transportvorrichtung einen bestimmten Behälterkorbträger umfasst oder nicht

14. Verfahren nach einem der Ansprüche 9 bis 13, wobei der wenigstens eine Behälterkorbträger das Erkennungselement umfasst.

15. Verfahren nach einem der Ansprüche 9 bis 14, wobei die Transportvorrichtung eine Transportkette mit einer Vielzahl von Kettengliedern umfasst, wobei einem Behälterkorbträger ein Kettenglied zugeordnet ist, wobei das Kettenglied das Erkennungselement umfasst.
